(19) Europäisches Patentamt

European Patent Office

Office européen des brevets

(11) **EP 0 743 078 B1**

(12) **FASCICULE DE BREVET EUROPEEN**

(45) Date de publication et mention
de la délivrance du brevet:
**18.07.2001 Bulletin 2001/29**

(51) Int Cl.[7]: **A62D 3/00**

(21) Numéro de dépôt: **96401053.2**

(22) Date de dépôt: **14.05.1996**

(54) **Procédé de traitement thermique de déchets contenant des métaux toxiques**

Verfahren zur thermischen Behandlung von schädlichen Metallen enthaltenden Abfällen

Process of thermal treatment of waste containing toxic metals

(84) Etats contractants désignés:
**BE FR GB**

(30) Priorité: **18.05.1995 FR 9505908**

(43) Date de publication de la demande:
**20.11.1996 Bulletin 1996/47**

(73) Titulaire: **COMMISSARIAT A L'ENERGIE ATOMIQUE**
**75015 Paris (FR)**

(72) Inventeurs:
• **Cartier, René**
**84130 Le Pontet (FR)**
• **Boen, Roger**
**30130 Saint-Alexandre (FR)**
• **Vincent, Jean-Jacques**
**30200 Bagnols sur Ceze (FR)**
• **Laurent, Olivier**
**30200 Venejan (FR)**

(74) Mandataire: **Dubois-Chabert, Guy et al**
**BREVATOME**
**3, rue du Docteur Lanceraux**
**75008 Paris (FR)**

(56) Documents cités:
WO-A-92/16262          DE-A- 2 240 928
GB-A- 2 277 515        US-A- 4 737 356
US-A- 5 041 398

• DATABASE WPI Section Ch, Week 7507 Derwent Publications Ltd., London, GB; Class M25, AN 75-12189W XP002009262 & SU-A-421 623 ( MOSCOW MENDELEEV CHEM TE) , 3 Septembre 1974
• PATENT ABSTRACTS OF JAPAN vol. 010, no. 004 (C-322), 9 Janvier 1986 & JP-A-60 165326 (YOKOHAMASHI;OTHERS: 01), 28 Août 1985,

## Description

La présente invention concerne un procédé de traitement thermique de déchets contenant des métaux toxiques.

Par métaux toxiques, on entend les métaux considérés comme polluants vis-à-vis de l'environnement. Ils comprennent les métaux lourds (tel que le zinc), des métaux alcalins ou alcalino-terreux (tels que le césium ou le strontium) et des métaux radioactifs. Ces métaux toxiques se retrouvent dans les déchets constitués par les ordures ménagères ou les rebuts des industries classiques ou nucléaires.

Les déchets posent un grave problème d'environnement. Il était d'usage de les stocker dans des décharges. On les traite maintenant dans des incinérateurs, ce qui a pour avantage de réduire leur masse, de les rendre théoriquement moins nocifs et, éventuellement, de pouvoir recycler les produits issus des incinérateurs.

Si les produits issus des incinérateurs contiennent des métaux toxiques, on ne peut pas les stocker en l'état. Ils doivent être concentrés dans des matrices de confinement de manière à éviter leur dispersion dans l'environnement. Ceci n'est pas toujours facile à obtenir. Par exemple, lors de l'incinération de déchets chlorés contenant des métaux (lourds tels que le zinc, ou alcalins, ou alcalino-terreux tels que Cs, Sr, ...), on observe la formation de chlorures de métaux (par exemple $ZnCl_2$) pendant les phases de pyrolyse ou de combustion. Ces chlorures de métaux sont gazeux à la température de combustion et s'évacuent donc avec les fumées générées par la combustion. Ils se recondensent après refroidissement des fumées et sont arrêtés avec les autres poussières par les systèmes de dépoussiérage de l'installation d'incinération.

Les poussières recueillies à la sortie de l'incinérateur contiennent donc des métaux toxiques sous forme de chlorures, c'est-à-dire sous une forme très soluble. Elles ne peuvent de ce fait être stockées en l'état et doivent subir un traitement ultérieur (cimentation, vitrification...) de manière à les rendre inertes vis-à-vis de l'environnement. Cependant, la présence de chlorures ne permet pas d'obtenir directement une matrice de confinement de bonne qualité car le chlore n'est quasiment pas confinable. Il faut donc prévoir un traitement de déchloration lourd, coûteux et difficile à mettre en oeuvre avant de pouvoir traiter toutes les poussières en vue de leur stockage.

On connaît ainsi par le document Patent Abstracts of Japan, vol. 010, n° 004 (C-322), 9 janvier 1986 et par JP-A-60 165 326, un procédé d'insolubilisation des métaux lourds et de leurs sels présents dans les cendres volantes résultant de l'incinération de déchets ménagers. Les cendres volantes sont mélangées avec un phosphate de métal alcalin avant d'être vitrifiées.

Afin de remédier à l'inconvénient constitué par la présence de métaux toxiques dans les résidus des déchets traités thermiquement, et notamment dans les fumées, on propose, selon la présente invention, d'introduire un réactif approprié pendant l'étape de pyrolyse ou de combustion des déchets pour obtenir avec les métaux présents une espèce chimique très peu soluble et qui peut subir un traitement pour rendre inertes ces métaux. Pour cela, on utilise un réactif à base de phosphore de manière à obtenir des phosphates des métaux en question.

On réalise ainsi un conditionnement in situ au cours de l'incinération. Les poussières récupérées par les systèmes de dépoussiérage ne contiennent donc plus d'espèces solubles de métaux toxiques. Elles peuvent être conditionnées sans avoir à faire intervenir un traitement contraignant de déchloration par exemple lorsque les déchets traités contiennent du chlore.

L'invention est d'autant plus utile que les ordures ménagères contiennent souvent du chlore, provenant par exemple d'articles en polychlorure de vinyle (PVC).

L'invention s'applique également bien, pour des raisons analogues, aux déchets bromés.

L'invention a donc pour objet un procédé de traitement thermique de déchets contenant un ou des métaux toxiques, le traitement thermique étant réalisé en présence d'un réactif à base de phosphore en quantité suffisante, caractérisé en ce que le traitement thermique est une pyrolyse, une combustion ou une post-combustion, permettant d'obtenir, à l'issue du traitement thermique, ledit ou lesdits métaux toxiques essentiellement sous forme de phosphate(s).

Le réactif peut être introduit directement dans le dispositif où s'effectue le traitement thermique (réacteur de pyrolyse ou thermolyse, four d'incinération) ou la post-combustion.

Il peut aussi être introduit dans le dispositif où s'effectue le traitement thermique par l'intermédiaire d'au moins un brûleur.

Le réactif peut également être introduit avec les déchets, en amont du réacteur, au moyen d'un doseur.

De préférence on utilisera comme réactif un phosphate organique et, plus particulièrement, un phosphate organique qui, lors du traitement thermique, fournit du phosphore sous forme gazeuse oxydée, par exemple le phosphate triphénylique, le phosphate tributylique ou le triarylphosphate.

Cependant, on peut également utiliser comme réactif de l'acide phosphorique, de l'anhydride phosphorique ou du phosphate d'ammonium.

Les phosphates de métaux lourds sont peu solubles et aisément vitrifiables. Les phosphates des métaux alcalins ou alcalino-terreux sont aisément vitrifiables. Leur stabilité est supérieure à celle des chlorures dans les conditions rencontrées lors de la combustion ou de la pyrolyse. Ils présentent par ailleurs l'avantage de donner des déchets non hygroscopiques, contrairement aux chlorures, ce qui limite de façon notable les phénomènes de corrosion des réacteurs et tuyauteries.

En présence de déchets contenant à la fois des métaux toxiques et du chlore, on introduira du phosphore sous une forme adaptée, lors de la combustion ou de la pyrolyse, de façon à obtenir des phosphates à la place de chlorures de ces métaux, dans une atmosphère contenant du gaz chlorhydrique qui n'est pas modifié par l'ajout du réactif. Il n'y a pas alors substitution des chlorures de métaux toxiques par d'autres chlorures, ni production d'autres chlorures par réaction avec le gaz chlorhydrique présent en large excès par rapport aux chlorures métalliques.

On va, à titre d'exemple, appliquer l'invention à l'incinération de déchets contenant 47% en poids de PVC (riche en chlore) et 17% en poids de néoprène (riche en zinc qui en constitue la charge minérale).

Le phosphore a été introduit en très léger excès, dans l'installation d'incinération, par rapport au zinc contenu dans les déchets. Le réactif contenant du phosphore est par exemple un phosphate organique qui, pendant la combustion, libère en atmosphère oxydante du $P_2O_5$.

Lors de la combustion de ces déchets, on obtient schématiquement les composés gazeux suivants : $ZnCl_2$, $P_2O_5$, $H_2O$ et $HCl$.

En phase vapeur, les réactions suivantes peuvent se produire, la liste n'étant pas exhaustive :

$$2\ H_2O + 2\ ZnCl_2 + P_2O_5 \rightarrow Zn_2P_2O_7 + 4\ HCl$$

$$3\ H_2O + 3\ ZnCl_2 + P_2O_5 \rightarrow Zn_3(PO_4)_2 + 6\ HCl$$

Dans ces réactions, aux températures considérées, seuls les composés $Zn_2P_2O_7$ et $Zn_3(PO_4)_2$ sont en phase solide.

Il y a donc formation de gaz chlorhydrique mais il n'y a plus de chlorure de zinc. Le chlore n'est pas mobilisé sous forme de $NaCl$ par exemple. Il y a substitution du chlorure de zinc par du gaz chlorhydrique.

Le phosphore peut être introduit sous forme de phosphate organique, par exemple le phosphate triphénylique, le phosphate tributylique (TBP), etc. Tous les réactifs contenant du phosphore peuvent convenir. Cependant, il est préférable d'utiliser des phosphates organiques qui, incinérés, n'apportent pas de charges minérales supplémentaires dans les cendres ou poussières mais uniquement du phosphore sous une forme gazeuse oxydée.

Dans les conditions décrites ci-dessus, 96% du zinc récupéré dans les poussières par l'électrofiltre du dispositif, avant la neutralisation des gaz acides résultant de la combustion des déchets ($HCl$, $SO_2$, etc.), se présente sous forme de phosphates. La teneur en chlore dans les poussières est de l'ordre de 1,5% en poids contre 40% sans utilisation du procédé selon l'invention. Un dépoussiérage à sec des fumées permet de récupérer des poussières qui ne sont plus hygroscopiques, contrairement au chlorure de zinc. Dans ces conditions, il a été constaté que les poussières sont insolubles et qu'elles peuvent de plus être conditionnées directement par fusion et vitrification contrairement aux poussières contenant des chlorures.

Le procédé selon l'invention peut aussi être appliqué dans le cas où la neutralisation est effectuée simultanément au dépoussiérage, traitement humide ou semi-sec. Dans le cas du traitement humide, les métaux lourds précipitent sous forme de phosphate et sont aisément séparables des sels de neutralisation. Dans le cas du traitement semi-sec, les poussières récupérées devront être lavées pour séparer les métaux lourds de la même façon.

Le procédé selon l'invention apporte les avantages suivants :

- traitement in situ des déchets contenant des métaux toxiques ;
- simplicité de mise en oeuvre, l'introduction du réactif dans l'installation d'incinération pouvant être obtenue par un principe classique (pompe, vis, ...) ;
- le réactif peut être introduit dans les brûleurs de l'installation d'incinération, sans modification de l'installation ;
- le réactif peut être introduit en très faible excès par rapport à la stoechiométrie ;
- l'action du réactif intervient essentiellement aux températures d'incinération ou de pyrolyse ;
- la transformation en phosphates n'entraîne pas une augmentation sensible du poids de cendres volantes ;
- la réaction qui a lieu empêche la formation des chlorures de métaux lourds sans pour autant générer d'autres chlorures ;
- le produit obtenu n'est plus ni hygroscopique, ni corrosif vis-à-vis des tuyauteries ou des appareils de filtration et a même tendance à les passiver ;
- une filtration sèche (filtre à manches, électrofiltre) permet de récupérer les métaux lourds sous forme de phosphates qui sont facilement conditionnables (la filtration sèche est rendue plus facile par le fait que le produit n'est plus hygroscopique) ;
- simplification considérable du traitement ultérieur nécessaire à rendre inertes les cendres volantes (fusion-vitrification et cimentation) et qui est directement applicable aux poussières ;
- les cendres d'incinération et les poussières récupérées par les filtres avant neutralisation peuvent être mélangées et vitrifiées en ligne avec l'incinération.

L'invention peut s'appliquer au domaine des déchets nucléaires en rapport avec les incinérateurs de déchets radioactifs $\alpha$. Cette technique permet d'obtenir des cendres volantes non solubles donc stockables sans difficulté. Ces cendres volantes peuvent être vitrifiées pour un stockage définitif. L'invention peut également s'appliquer aux incinérateurs de déchets radioactifs β ou γ.

Le conditionnement des cendres volantes provenant de l'incinération des ordures ménagères en sacs plastiques est une pratique que les législations des pays industriels tend à interdire. Les conditionnements acceptables seront le bitumage, le bétonnage ou la vitrification, procédés actuellement rendus difficiles à cause de la présence de chlore dans les déchets. Le traitement des déchets selon la présente invention permet de mettre aisément en oeuvre ces procédés de conditionnement.

## Revendications

1. Procédé de traitement thermique de déchets contenant un ou des métaux toxiques, le traitement thermique étant réalisé en présence d'un réactif à base de phosphore en quantité suffisante, caractérisé en ce que le traitement thermique est une pyrolyse, une combustion ou une post-combustion, permettant d'obtenir, à l'issue du traitement thermique, ledit ou lesdits métaux toxiques essentiellement sous forme de phosphate(s).

2. Procédé selon la revendication 1, caractérisé en ce que le réactif est introduit directement dans le dispositif où s'effectue le traitement thermique ou la post-combustion.

3. Procédé selon la revendication 1, caractérisé en ce que le réactif est introduit dans le dispositif où s'effectue le traitement thermique par l'intermédiaire d'au moins un brûleur.

4. Procédé selon la revendication 1, caractérisé en ce que le réactif est introduit avec les déchets en amont du dispositif où s'effectue le traitement thermique, au moyen d'un doseur.

5. Procédé selon l'une quelconque des revendications 1 à 4, caractérisé en ce que le réactif est un phosphate organique.

6. Procédé selon la revendication 5, caractérisé en ce que le réactif est un phosphate organique qui, lors du traitement thermique, fournit du phosphore sous une forme gazeuse oxydée.

7. Procédé selon la revendication 6, caractérisé en ce que le réactif est du phosphate triphénylique, du phosphate tributylique ou du triarylphosphate.

8. Procédé selon l'une quelconque des revendications 1 à 4, caractérisé en ce que le réactif est de l'acide phosphorique, de l'anhydride phosphorique ou du phosphate d'ammonium.

9. Application du procédé selon l'une quelconque des revendications 1 à 8 à des déchets chlorés.

10. Application du procédé selon l'une quelconque des revendications 1 à 8, à des déchets bromés.

11. Application du procédé selon l'une quelconque des revendications 1 à 8 à des déchets radioactifs α, β ou γ.

## Patentansprüche

1. Verfahren zur thermischen Behandlung von ein oder mehrere schädliche Metalle enthaltenden Abfällen, wobei die thermische Behandlung unter Beteiligung eines Reagens auf Phosphorbasis in ausreichender Menge erfolgt, **dadurch gekennzeichnet,** dass die thermische Behandlung eine Pyrolyse, eine Verbrennung oder eine Nachverbrennung ist, die ermöglicht, das oder die schädlichen Metalle am Ende der thermischen Behandlung im Wesentlichen in Form von Phosphat(en) zu erhalten.

2. Verfahren nach Anspruch 1, dadurch gekennzeichnet, dass das Reagens direkt in der Vorrichtung zugeführt wird, in der die thermische Behandlung oder die Nachverbrennung erfolgt.

3. Verfahren nach Anspruch 1, dadurch gekennzeichnet, dass das Reagens in der Vorrichtung zugeführt wird, in der die thermische Behandlung mittels wenigstens eines Brenners erfolgt.

4. Verfahren nach Anspruch 1, dadurch gekennzeichnet, dass das Reagens in die Vorrichtung, in der die thermische Behandlung erfolgt, mittels einer Dosiereinrichtung eingeführt wird, zusammen mit den Abfällen.

5. Verfahren nach einem der Ansprüche 1 bis 4, dadurch gekennzeichnet, dass das Reagens ein organisches Phosphat ist.

6. Verfahren nach Anspruch 5, dadurch gekennzeichnet, dass das Reagens ein organisches Phosphat ist, das bei der thermischen Behandlung Phosphor in Form eines oxidierten Gases liefert.

7. Verfahren nach Anspruch 6, dadurch gekennzeichnet, dass das Reagens Triphenylphosphat oder Triarylphosphat ist.

8. Verfahren nach einem der Ansprüche 1 bis 4, dadurch gekennzeichnet, dass das Reagens Phosphorsäure, Phosphor(V)-oxid oder Ammoniumphosphat ist.

**9.** Anwendung des Verfahrens nach einem der Ansprüche 1 bis 8 bei chlorhaltigen bzw. chlorierten Abfällen.

**10.** Anwendung des Verfahrens nach einem der Ansprüche 1 bis 8 bei bromierten Abfällen.

**11.** Anwendung des Verfahrens nach einem der Ansprüche 1 bis 8 bei Abfällen mit einer Radioaktivität des Typs α, β oder γ.

**10.** Method according to any one of the claims 1 to 8, characterized in that the waste is brominated.

**11.** Method according to any one of the claims 1 to 8, characterized in that the waste is α, β or γ radioactive waste.

## Claims

**1.** Method for the heat treatment of waste containing one or more toxic metals, the heat treatment being carried out in the presence of a phosphorus-based reagent in an adequate quantity, characterized in that the heat treatment is a pyrolysis, a combustion or a post-combustion making it possible to obtain, at the end of the heat treatment, said toxic metal or metals essentially in phosphate form.

**2.** Method according to claim 1, characterized in that the reagent is introduced directly into the device where the heat treatment or post-combustion is carried out.

**3.** Method according to claim 1, characterized in that the reagent is introduced into the device where the heat treatment is carried out by means of at least one burner.

**4.** Method according to claim 1, characterized in that the reagent is introduced with the waste upstream of the device where the heat treatment is effected with the aid of a doser.

**5.** Method according to any one of the claims 1 to 4, characterized in that the reagent is an organic phosphate.

**6.** Method according to claim 5, characterized in that the reagent is an organic phosphate which during the heat treatment furnishes phosphorus in an oxidized gaseous form.

**7.** Method according to claim 6, characterized in that the reagent is triphenyl phosphate, tributyl phosphate or triaryl phosphate.

**8.** Method according to any one of the claims 1 to 4, characterized in that the reagent is phosphoric acid, phosphoric anhydride or ammonium phosphate.

**9.** Method according to any one of the claims 1 to 8, characterized in that the waste is chlorinated.